# EUROPEAN PATENT APPLICATION

(11) **EP 4 822 834 A1**
(43) Date of publication of application: **14.10.2026**
(21) Application number: 24866545.7
(22) Date of filing: 04.03.2024
(51) Int. Cl.: H01M 50/103, H01M 50/169, B21C 23/00, B21C 23/08

(54) **CAN FOR SECONDARY BATTERY AND METHOD FOR MANUFACTURING CAN FOR SECONDARY BATTERY**

(30) Priority: 05.12.2023 KR 20230174422
(71) Applicant: SAMSUNG SDI CO., LTD., Yongin-si, Gyeonggi-do 17084 (KR)
(72) Inventor: LEE, Hyunsoo, Yongin-si, Gyeonggi-do 17084 (KR)
(74) Representative: Gulde & Partner
(86) International application number: PCT/KR2024/002752
(87) International publication number: WO 2025/121547

(57) **Abstract**

The present disclosure relates to a can for a secondary battery, and the technical problem to be solved is to provide a can with a reinforced corner. To achieve this, a can for a secondary battery of the present disclosure comprises a first surface comprising long sides extending in a first direction, a second surface facing the first surface, and comprising long sides extending in the first direction, a third surface perpendicular to the first surface, and in contact with the long side of the first surface and the long side of the second surface, and a fourth surface facing the third surface, and in contact with the long side of the first surface and the long side of the second surface. A corner formed by the long side of the first surface and the fourth surface in contact with the long side of the first surface has a diagonal thickness thicker than thicknesses of the first surface and the fourth surface.

## Description

### Technical Field

The present disclosure relates to a can for a secondary battery and a method for manufacturing a can for a secondary battery. For example, the present disclosure relates to a can for a secondary battery including a corner of which a diagonal thickness is thick and a method for manufacturing a can for a secondary battery.

### Background Art

Secondary batteries are rechargeable batteries, and represent batteries that may be charged and discharged multiple times. Such secondary batteries are mainly used in a wide range of applications such as electronic devices (smartphones, laptops, tablets, and the like), electric vehicles, solar power generation, and emergency power supplies. In particular, because lithium-ion batteries have high energy density and high charging and discharging efficiency, the lithium-ion batteries are used in various electronic devices and electric vehicles.

The secondary batteries may be classified into cylindrical secondary batteries, square secondary batteries, and pouch-type secondary batteries depending on a shape of a case. The square secondary battery has a structure in which an electrode assembly is built into a square metal can. The electrode assembly is inserted into the metal can, and a cap plate is welded to seal the can.

In the case of a metal can for a side terminal type among square metal cans, a length of the can increases with a large capacity of the battery. However, the rigidity of the can deteriorates in a longitudinal direction, and the buckling of the can occurs. The buckling means that, when a length of a column is larger than a dimension of a cross section and when a compression load is applied to both ends of the column and the load reaches a certain extent, the column is suddenly bent. Similarly, when the length of the can is larger than a dimension of a cross section and when a load is applied to the can, bending occurs. It is desirable to increase the rigidity of the can to prevent such buckling of the can.

The above information disclosed in this Background section is for enhancement of understanding of the background of the present disclosure, and therefore, it may contain information that does not constitute related (or prior) art.

### DISCLOSURE OF INVENTION

### Technical Problem

The problem to be solved by the present invention is to provide a can for a secondary battery, a secondary battery, and a method for manufacturing a secondary battery for solving the above problems.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

### Solution to Problem

According to one embodiment of the present invention for solving the technical problem, a can for a secondary battery includes a first surface including long sides extending in a first direction, a second surface facing the first surface, and including long sides extending in the first direction, a third surface perpendicular to the first surface, and in contact with the long side of the first surface and the long side of the second surface, and a fourth surface facing the third surface, and in contact with the long side of the first surface and the long side of the second surface. A corner formed by the long side of the first surface and the fourth surface in contact with the long side of the first surface has a diagonal thickness thicker than thicknesses of the first surface and the fourth surface.

According to one embodiment of the present invention, the corner may include an inner surface with a first radius of curvature and an outer surface with a second radius of curvature different from the first radius of curvature, and the first radius of curvature may be larger than the second radius of curvature.

According to one embodiment of the present invention, the first radius of curvature may be equal to or more than a value obtained by adding R0.5 to the second radius of curvature.

According to one embodiment of the present invention, the first radius of curvature may be equal to or more than R2.5.

According to one embodiment of the present invention, the second radius of curvature may be equal to or less than R2.0.

According to one embodiment of the present invention, the can for a secondary battery may further include a cap plate fastened to an opening portion formed by the first surface to the fourth surface, and the opening portion and the cap plate may be fastened by welding.

According to one embodiment of the present invention, the thickness of the first surface and the thickness of the second surface may be equal.

According to one embodiment of the present invention, the diagonal thickness may be a value obtained by adding a difference between the first radius of curvature and the second radius of curvature to the thickness of the first surface.

According to one embodiment of the present invention, the first surface to the fourth surface may be made of a material containing aluminum.

According to one embodiment of the present invention for solving the technical problem, a method for manufacturing a can for a secondary battery includes a step of inserting a metallic material into a mold, and a step of plastic-deforming the metallic material to manufacture a can. The plastic-deforming step includes a step of forming a first surface including long sides extending in a first direction, a second surface facing the first surface, and including long sides extending in the first direction, a third surface perpendicular to the first surface, and in contact with the long side of the first surface and the long side of the second surface, and a fourth surface facing the third surface, and in contact with the long side of the first surface and the long side of the second surface, and forming a corner formed by the long side of the first surface and the fourth surface in contact with the long side of the first surface to have a diagonal thickness thicker than thicknesses of the first surface and the fourth surface.

According to one embodiment of the present invention, the plastic deformation may be deformation by extrusion processing.

According to one embodiment of the present invention, the corner may include an inner surface with a first radius of curvature and an outer surface with a second radius of curvature different from the first radius of curvature R1, and the first radius of curvature may be larger than the second radius of curvature.

According to one embodiment of the present invention, the first radius of curvature may be equal to or more than a value obtained by adding R0.5 to the second radius of curvature.

According to one embodiment of the present invention, the first radius of curvature may be equal to or more than R2.5.

According to one embodiment of the present invention, the second radius of curvature may be equal to or less than R2.0.

According to one embodiment of the present invention, the method for manufacturing a can for a secondary battery may further include a step of fastening a cap plate to an opening portion formed by the first surface to the fourth surface. The opening portion and the cap plate may be fastened by welding.

According to one embodiment of the present invention, the thickness of the first surface and the thickness of the second surface may be equal.

According to one embodiment of the present invention, the diagonal thickness may be a value obtained by adding a difference between the first radius of curvature and the second radius of curvature to the thickness of the first surface.

According to one embodiment of the present invention for solving the technical problem, a can for a secondary battery includes a first surface including long sides extending in a first direction, a second surface facing the first surface, and including long sides extending in the first direction, a third surface perpendicular to the first surface, and in contact with the long side of the first surface and the long side of the second surface, a fourth surface facing the third surface, and in contact with the long side of the first surface and the long side of the second surface, a fifth surface in contact with short sides of the first to fourth surfaces, and an opening portion facing the fifth surface. A corner formed by the short side of the first surface and the fifth surface in contact with the short side of the first surface has a diagonal thickness thicker than thicknesses of the first surface and the fifth surface.

According to one embodiment of the present invention, the corner may include an inner surface with a third radius of curvature and an outer surface with a fourth radius of curvature different from the third radius of curvature, the third radius of curvature may be larger than the fourth radius of curvature, the thickness of the first surface and the thickness of the fifth surface may be equal, and the diagonal thickness may be a value obtained by adding a difference between the third radius of curvature and the fourth radius of curvature to the thickness of the first surface.

### Advantageous Effects of Invention

According to some embodiments of the present invention, the thickness of the corner of the can may be formed to be thick to prevent the buckling of the can.

According to some embodiments of the present invention, the rigidity of the can in the longitudinal direction is improved, and the buckling of a long side terminal may be prevented.

According to some embodiments of the present invention, the space for welding the cap plate with the opening portion can be secured while the thickness of the corner of the can is thickened.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a perspective view and a sectional view of a can for a secondary battery according to one embodiment of the present invention.
FIG. 2 is a perspective view and a sectional view of a can for a secondary battery according to another embodiment of the present invention.
FIG. 3 is a perspective view and a sectional view of a can for a secondary battery according to still another embodiment of the present invention.
FIGS. 4 and 5 are perspective views of a secondary battery assembled by using the can for a secondary battery according to the present disclosure.
FIG. 6 is a flowchart for describing a method for manufacturing a secondary battery including a can for a secondary battery according to the present disclosure of the present invention.

### DESCRIPTION OF EMBODIMENTS

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

Also, it will be further understood that the terms "includes," "including," "comp rises," and/or "comprising," when used in this specification, specify the presence of st ated features, integers, steps, operations, elements, and/or components but do not precl ude the presence or addition of one or more other features, integers, steps, operations, elements, components, and/or groups thereof.

Also, in the figures, dimensions of the various elements, layers, etc. may be ex aggerated for clarity of illustration. The same reference numerals designate the same el ements.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as bein g uniform in a given region, it may mean that it is uniform in terms of an average.

It will be understood that, although the terms first, second, etc. may be used herein to describe various elements, these elements should not be limited by these terms. These terms are only used to distinguish one element from another element. Thus, a first element could be termed a second element unless the context clearly indicates otherwise.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components". It will also be understood that when an element is referred to as being "electrically coupled" to another element, it may be directly coupled to the other element or intervening elements may be present.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to be limiting of the present disclosure.

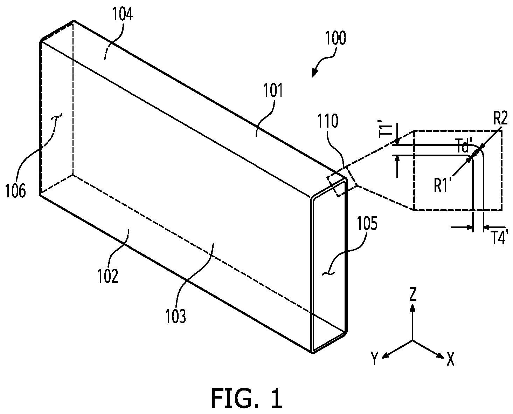

FIG. 1 is a perspective view and a sectional view of a can for a secondary battery according to one embodiment of the present invention.

Referring to FIG. 1, a case 100 for a secondary battery may correspond to a structure for accommodating an electrode assembly. Although not illustrated, the electrode assembly may include a first electrode plate, a second electrode plate, and a separator. The first electrode plate, the second electrode plate, and the separator may be formed as thin plates or films. The electrode assembly may include a structure in which the first electrode plate, the separator, and the second electrode plate are sequentially stacked and wound or are repeatedly stacked. When the electrode assembly includes a wound stacked body, a winding axis may be in a first direction (X-axis). In one embodiment, the first direction (X-axis) may correspond to a longitudinal direction of the can 100.

The can 100 may accommodate the electrode assembly and an electrolyte. The can 100 may include a first surface 101, a second surface 102, a third surface 103, a fourth surface 104, a first opening portion 105, and a second opening portion 106.

The first surface 101 may include long sides extending in the first direction (X-axis) and short sides extending in a second direction (Y-axis). The first surface 101 may be a rectangular shape. The first direction (X-axis) may be the longitudinal direction of the can 100. In one embodiment, the first direction (X-axis) may be perpendicular to the second direction (Y-axis).

The second surface 102 may include long sides extending in the first direction (X-axis) and short sides extending in the second direction (Y-axis). The second surface 102 may be a rectangular shape. The second surface 102 may face the first surface 101. For example, the second surface 102 may face the first surface 101 in a third direction (Z-axis). In one embodiment, the third direction (Z-axis) may be perpendicular to the first direction (X-axis) and the second direction (Y-axis).

A length of the long side of the first surface 101 and a length of the long side of the second surface 102 may be equal. A length of the short side of the first surface 101 and a length of the short side of the second surface 102 may be equal. Shapes of the first surface 101 and second surface 102 may be equal.

The third surface 103 may include long sides extending in the first direction (X-axis) and short sides extending in the third direction (Z-axis). The third surface 103 may be a rectangular shape. The third surface 103 may be in contact with the long side of the first surface 101 and the long side of the second surface 102. For example, one of the long sides of the third surface 103 may be in contact with the long side of the first surface 101 and the remainder of the long sides of the third surface 103 may be in contact with the long side of the second surface 102. A length of the short side of the third surface 103 may be larger than a length of the short side of the first surface 101.

The fourth surface 104 may include long sides extending in the first direction (X-axis) and short sides extending in the third direction (Z-axis). The fourth surface 104 may be a rectangular shape. The fourth surface 104 may face the third surface 103. For example, the fourth surface 104 may face the third surface 103 in the second direction (Y-axis). The fourth surface 104 may be in contact with the long side of the first surface 101 and the long side of the second surface 102. For example, one of the long sides of the fourth surface 104 may be in contact with the long side of the first surface 101 and the remainder of the long sides of the fourth surface 104 may be in contact with the long side of the second surface 102. A length of the short side of the fourth surface 104 may be larger than a length of the short side of the first surface 101.

The first opening portion 105 may include long sides extending in the third direction (Z-axis) and short sides extending in the second direction (Y-axis). The first opening portion 105 may be a rectangular shape. The first opening portion 105 may be defined as a structure formed by the short sides of the first to fourth surfaces 101, 102, 103, and 104.

The second opening portion 106 may face the first opening portion 105. For example, the second opening portion 106 may face the first opening portion 105 in the first direction (X-axis). The second opening portion 106 may be defined as a structure formed by the short sides of the first to fourth surfaces 101, 102, 103, and 104. The second opening portion 106 may be a passage through which the electrode assembly is inserted.

The first and second surfaces 101 and 102 may cover a surface formed in +Z-axis and -Z-axis directions of the electrode assembly, while the third surface 103 and the fourth surface 104 may cover a surface formed in +Y-axis and -Y-axis directions of the electrode assembly. For example, the first to fourth surfaces 101, 102, 103, and 104 surround the electrode assembly in the second direction (Y-axis) and the third direction (Z-axis).

A material of the can 100 may include conductive metal such as aluminum, an aluminum alloy, stainless steel, or nickel-plated steel.

According to one embodiment, a corner 110 may be formed by the long side of the first surface 101 and the fourth surface 104 in contact with the long side of the first surface 101. A thickness T1' of the first surface 101 and a thickness T4' of the fourth surface 104 may be equal. A diagonal thickness Td' of the corner may be equal to the thickness T1' of the first surface 101 and the thickness T4' of the fourth surface 104. These thicknesses may satisfy the following expression. 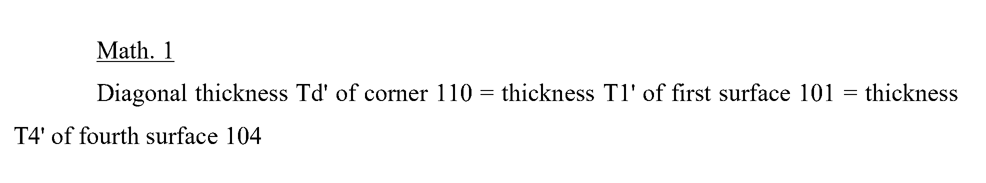 Diagonal thickness Td' of corner 110 = thickness T1' of first surface 101 = thickness T4' of fourth surface 104 Math. 1

To achieve this, the corner 110 includes an inner surface with a first radius of curvature R1' and an outer surface with a second radius of curvature R2' different from the first radius of curvature R1'. The second radius of curvature R2' may be larger than the first radius of curvature R1'. For example, the second radius of curvature R2' may be equal to a value obtained by adding the thickness T1' of the first surface or the thickness T4' of the fourth surface to the first radius of curvature R1'. For example, these radii of curvature may satisfy the following expression. 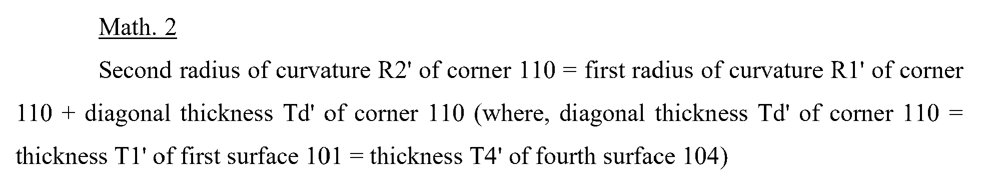 Second radius of curvature R2' of corner 110 = first radius of curvature R1' of corner 110 + diagonal thickness Td' of corner 110 (where, diagonal thickness Td' of corner 110 = thickness T1' of first surface 101 = thickness T4' of fourth surface 104) Math. 2

When such an expression is satisfied, the buckling of the can 100 may frequently occur. For example, when a non-uniform load is applied to the can in the Z-axis direction, the can formed to be long in the X-axis direction may be easily bent. Such bending may be solved by setting the diagonal thickness Td' of the corner 110 to be thicker than the thickness T1' of the first surface and the thickness T4' of the fourth surface.

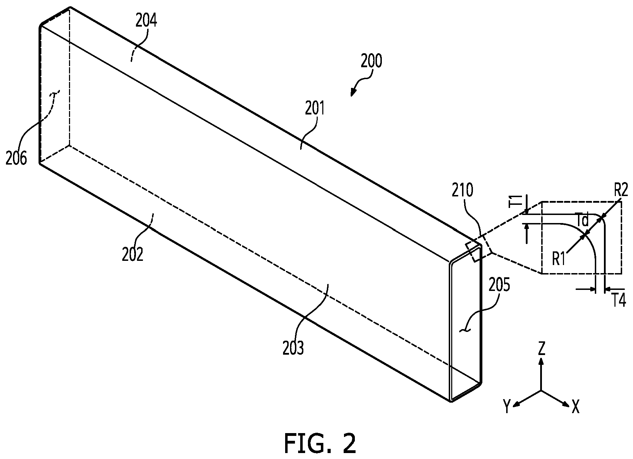

FIG. 2 is a perspective view and a sectional view of a can for a secondary battery according to another embodiment of the present invention.

A can 200 may accommodate an electrode assembly and an electrolyte. The can 200 may include a first surface 201, a second surface 202, a third surface 203, a fourth surface 204, a first opening portion 205, and a second opening portion 206.

The can 200 illustrated in FIG. 2 may correspond to a can with a length further increased in the X-axis direction than the can 100 illustrated in FIG. 1. For example, the can 200 illustrated in FIG. 2 may have a structure with a length more than twice in the X-axis direction than the can 100 illustrated in FIG. 1. Because the buckling of the can 200 having such a structure may be more likely to occur, it is desirable to provide a reinforcing structure.

The first surface 201 may include long sides extending in the first direction (X-axis) and short sides extending in the second direction (Y-axis). For example, the long side of the first surface 201 may have a length more than twice the long side of the first surface 101 illustrated in FIG. 1. The first surface 201 may be a rectangular shape. The first direction (X-axis) may be a longitudinal direction of the can 200. In one embodiment, the first direction (X-axis) may be perpendicular to the second direction (Y-axis).

The second surface 202 may include long sides extending in the first direction (X-axis) and short sides extending in the second direction (Y-axis). The second surface 202 may be a rectangular shape. The second surface 202 may face the first surface 201. For example, the second surface 202 may face the first surface 201 in the third direction (Z-axis). In one embodiment, the third direction (Z-axis) may be perpendicular to the first direction (X-axis) and the second direction (Y-axis).

A length of the long side of the first surface 201 and a length of the long side of the second surface 202 may be equal. A length of the short side of the first surface 201 and a length of the short side of the second surface 202 may be equal. Shapes of the first surface 201 and the second surface 202 may be equal.

The third surface 203 may include long sides extending in the first direction (X-axis) and short sides extending in the third direction (Z-axis). The third surface 203 may be a rectangular shape. The third surface 203 may be in contact with the long side of the first surface 201 and the long side of the second surface 202. For example, one of the long sides of the third surface 203 may be in contact with the long side of the first surface 201, and the remainder of the long sides of the third surface 203 may be in contact with the long side of the second surface 202. A length of the short side of the third surface 203 may be larger than a length of the short side of the first surface 201.

The fourth surface 204 may include long sides extending in the first direction (X-axis) and short sides extending in the third direction (Z-axis). The fourth surface 204 may be a rectangular shape. The fourth surface 204 may face the third surface 203. For example, the fourth surface 204 may face the third surface 203 in the second direction (Y-axis). The fourth surface 204 may be in contact with the long side of the first surface 201 and the long side of the second surface 202. For example, one of the long sides of the fourth surface 204 may be in contact with the long side of the first surface 201, and the remainder of the long sides of the fourth surface 204 may be in contact with the long side of the second surface 202. A length of the short side of the fourth surface 204 may be larger than a length of the short side of the first surface 201.

The first opening portion 205 may include long sides extending in the third direction (Z-axis) and short sides extending in the second direction (Y-axis). The first opening portion 205 may be a rectangular shape. The first opening portion 205 may be defined as a structure formed by the short sides of the first to fourth surfaces 201, 202, 203, and 204.

The second opening portion 206 may face the first opening portion 205. For example, the second opening portion 206 may face the first opening portion 205 in the first direction (X-axis). The second opening portion 206 may be defined as a structure formed by the short sides of the first to fourth surfaces 201, 202, 203, and 204. The second opening portion 206 may be a passage through which the electrode assembly is inserted.

According to one embodiment, a corner 210 may be formed by the long side of the first surface 201 and the fourth surface 204 in contact with the long side of the first surface 201. A diagonal thickness Td of the corner 210 may be thicker than thicknesses of the first surface and the fourth surface. To achieve this, the corner 210 may include an inner surface with a first radius of curvature R1 and an outer surface with a second radius of curvature R2 different from the first radius of curvature R1. The first radius of curvature R1 may be larger than the second radius of curvature R2. For example, the first radius of curvature R1 may be equal to or more than a value obtained by adding R0.5 to the second radius of curvature R2. A relationship between the first radius of curvature R1 and the second radius of curvature R2 may be expressed as follows. $First radius of curvature R 1 > second radius of curvature R 2$ Math. 3 $First radius of curvature R 1 \geq second radius of curvature R 2 + R 0.5$ Math. 4

In one embodiment, the first radius of curvature R1 may be equal to or more than R2.5. According to one embodiment, the second radius of curvature R2 may be equal to or less than R2.0. When the corner is designed in this manner, a space for welding the opening portion of the can and a cap plate may be secured, and thus, welding can become easy.

According to one embodiment, the thickness T1 of the first surface 201 and the thickness T4 of the fourth surface 204 may be equal to each other, and the diagonal thickness Td of the corner may be different from the thickness T1 of the first surface 201 and the thickness T4 of the fourth surface 204. For example, these thicknesses may satisfy the following expression. 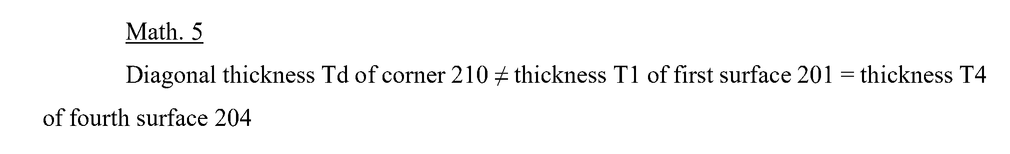 Diagonal thickness Td of corner 210 ≠ thickness T1 of first surface 201 = thickness T4 of fourth surface 204 Math. 5

For example, the diagonal thickness Td of the corner may be thicker than the thickness T1 of the first surface 201 and the thickness T4 of the fourth surface 204. For example, when the thickness T1 of the first surface 201 and the thickness T4 of the fourth surface 204 are equal to each other, the diagonal thickness Td of the corner may be a value obtained by adding a difference between the first radius of curvature R1 and the second radius of curvature R2 to the thickness T1 of the first surface 201. 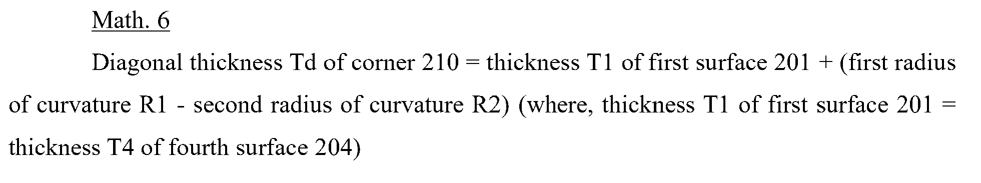 Diagonal thickness Td of corner 210 = thickness T1 of first surface 201 + (first radius of curvature R1 - second radius of curvature R2) (where, thickness T1 of first surface 201 = thickness T4 of fourth surface 204) Math. 6

When the corner of the can is designed as illustrated in FIG. 2, the diagonal thickness of the corner may be designed to be thicker than the thicknesses of the first surface and/or the fourth surface, and thus, the buckling that may occur in the X-axis direction can be more effectively prevented than in FIG. 1.

The can 200 for a secondary battery illustrated in FIG. 2 may be manufactured by extrusion processing. For example, the can 200 may be provided in a rectangular sectional shape having a space therein. The extrusion processing may be a processing method for producing a long product having the same sectional shape as a hole in a die by allowing a material having a strong rigidity such as metal to pass through the die. Because the extrusion processing is highly compressive during processing, the product may have dense texture and good mechanical properties. The extrusion method may include cold extrusion and thermal extrusion. For example, the can 200 may be manufactured by thermal extrusion. Through the thermal extrusion, an oxide film (insulating film) may be formed on a surface of the can 200, and thus, an electrical short circuit between the electrode assembly and the can 200 can be prevented. The can 200 having no joint (for example, no welding region) can be easily provided by thermal extrusion. Through the design of the die, the thicknesses of the surfaces and the diagonal thickness and radii of curvature of the corner may be adjusted.

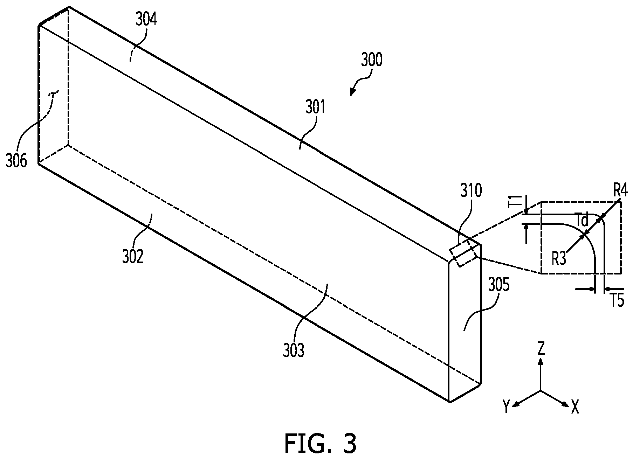

FIG. 3 is a perspective view and a sectional view of a can for a secondary battery according to still another embodiment of the present invention. Detailed description of elements corresponding to the elements illustrated in FIG. 2 will be omitted, and different elements from FIG. 2 will be described.

A can 300 may include a first surface 301, a second surface 302, a third surface 303, a fourth surface 304, a fifth surface 305, and an opening portion 306. The can 300 for a secondary battery illustrated in FIG. 3 may be different from the cans 100 and 200 illustrated in FIGS. 1 and 2 in that the can 300 has one opening portion and has the fifth surface 305 formed in a direction facing the opening portion.

The first surface 301 may include long sides extending in the first direction (X-axis) and short sides extending in the second direction (Y-axis). The first surface 301 may be a rectangular shape.

The second surface 302 may include long sides extending in the first direction (X-axis) and short sides extending in the second direction (Y-axis). The second surface 302 may be a rectangular shape. The second surface 302 may face the first surface 301.

A length of the long side of the first surface 301 and a length of the long side of the second surface 302 may be equal. A length of the short side of the first surface 301 and a length of the short side of the second surface 302 may be equal. Shapes of the first surface 301 and the second surface 302 may be equal.

The third surface 303 may include long sides extending in the first direction (X-axis) and short sides extending in the third direction (Z-axis). The third surface 303 may be a rectangular shape. The third surface 303 may be in contact with the long side of the first surface 301 and the long side of the second surface 302.

The fourth surface 304 may include long sides extending in the first direction (X-axis) and short sides extending in the third direction (Z-axis). The fourth surface 304 may be a rectangular shape. The fourth surface 304 may face the third surface 303. The fourth surface 304 may be in contact with the long side of the first surface 301 and the long side of the second surface 302.

The fifth surface 305 may include long sides extending in the third direction (Z-axis) and short sides extending in the second direction (Y-axis). The fifth surface 305 may be a rectangular shape. The fifth surface 305 may correspond to one surface formed in contact with the short sides of the first to fourth surfaces 301, 202, 203, and 204. For example, the long side of the fifth surface 305 may be in contact with the short side of the third surface 303 and the short side of the fourth surface 304. The short side of the fifth surface 305 may be in contact with the short side of the first surface 301 and the short side of the second surface 302.

The opening portion 306 may face the fifth surface 305. For example, the opening portion 306 may face the fifth surface 305 in the first direction (X-axis). The opening portion 306 may be defined as a structure formed by the short sides of the first to fourth surfaces 301, 302, 303, and 304. The opening portion 306 may be a passage through which the electrode assembly is inserted.

According to one embodiment, a corner 310 may be formed by the short side of the first surface 301 and the fifth surface 305 in contact with the short side of the first surface 301. A diagonal thickness Td of the corner 310 may be thicker than thicknesses of the first surface and the fifth surface. To achieve this, the corner 310 includes an inner surface with a third radius of curvature R3 and an outer surface with a fourth radius of curvature R4 different from the third radius of curvature R3. The third radius of curvature R3 may be larger than the fourth radius of curvature R4. For example, the third radius of curvature R3 may be equal to or more than a value obtained by adding R0.5 to the fourth radius of curvature R4. A relationship between the third radius of curvature R3 and the fourth radius of curvature R4 may be expressed as follows. $Third radius of curvature R 3 > fourth radius of curvature R 4$ Math. 7 $Third radius of curvature R 3 \geq fourth radius of curvature R 4 + R 0.5$ Math. 8

In one embodiment, the thickness T1 of the first surface 301 and a thickness T5 of the fifth surface 305 may be equal to each other, and the diagonal thickness Td of the corner may be different from the thickness T1 of the first surface 301 and the thickness T5 of the fifth surface 305. For example, these thicknesses may satisfy the following expression. 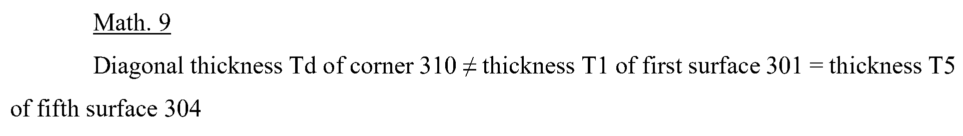 Diagonal thickness Td of corner 310 ≠ thickness T1 of first surface 301 = thickness T5 of fifth surface 304 Math. 9

For example, the diagonal thickness Td of the corner may be thicker than the thickness T1 of the first surface 301 and the thickness T5 of the fifth surface 304. For example, when the thickness T1 of the first surface 301 and the thickness T5 of the fifth surface 305 are equal to each other, the diagonal thickness Td of the corner may be a value obtained by adding a difference between the third radius of curvature R3 and the fourth radius of curvature R4 to the thickness T1 of the first surface 301. 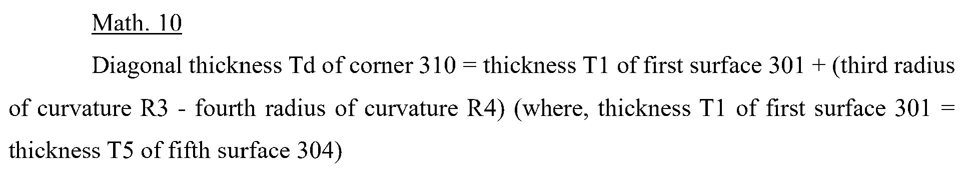 Diagonal thickness Td of corner 310 = thickness T1 of first surface 301 + (third radius of curvature R3 - fourth radius of curvature R4) (where, thickness T1 of first surface 301 = thickness T5 of fifth surface 304) Math. 10

When the corner of the can is designed as illustrated in FIG. 3, compared with FIG. 1, the diagonal thickness of the corner may be designed to be thicker than the thicknesses of the first surface and/or the fifth surface, and thus, the buckling that may occur in other directions other than the X-axis can be more effectively prevented than in FIG. 1.

The first to fifth surfaces 301, 302, 303, 304, and 305 of the can 300 for a secondary battery illustrated in FIG. 3 may be integrally formed. The first to fifth surfaces 301, 102, 303, 304, and 305 of the can 300 may be integrally formed, for example, by a deep drawing process. The deep drawing process may be a process of manufacturing containers with no joint and with a bottom by bringing an outer periphery of a plate to closer to an inside by using a punch and a die in a pressing process of the plate. In the deep drawing process, through the design of the punch and the die, the thicknesses of the surfaces and the diagonal thickness and the radii of curvature of the corner may be adjusted.

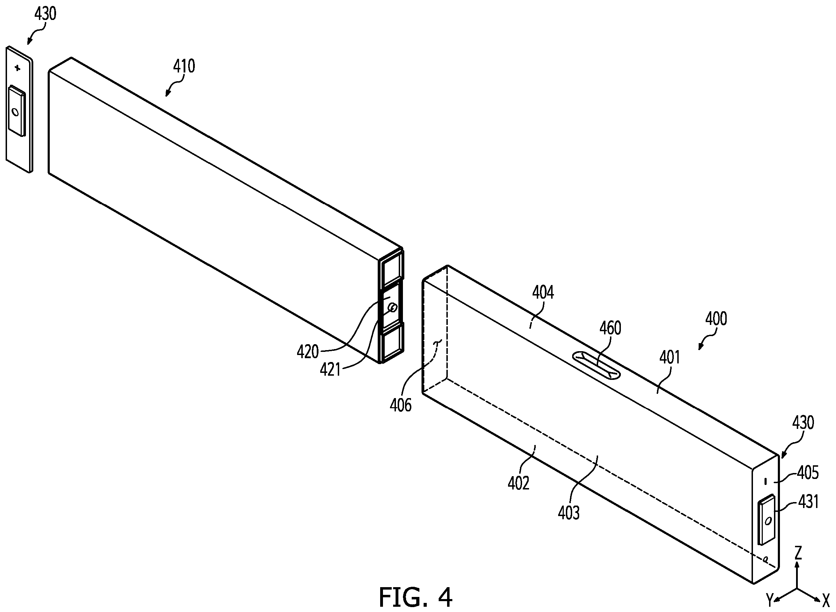

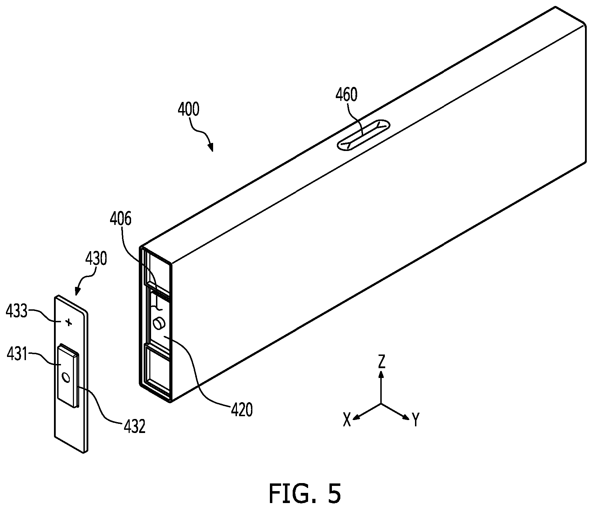

FIGS. 4 and 5 are perspective views of a secondary battery assembled by using the can for a secondary battery according to the present disclosure.

A can 400 for a secondary battery may include an electrode assembly 410, a vent member 460, first terminal plates 431, a first insulating member (not illustrated), and cap assemblies 430.

The electrode assembly 410 may be accommodated inside the can 100. Although not illustrated, the electrode assembly 410 may include a first electrode plate, a second electrode plate, and a separator. The first electrode plate, the second electrode plate, and the separator may be formed as thin plates or films. The electrode assembly 410 may include a structure in which the first electrode plate, the separator, and the second electrode plate are sequentially stacked and wound or are repeatedly stacked. When the electrode assembly 410 includes a wound stacked body, a winding axis may be the first direction (X-axis). In one embodiment, the first direction (X-axis) may be a longitudinal direction of the can 400.

The first electrode plate may serve as a negative electrode. The first electrode plate may include a negative electrode coated portion on which a negative electrode active material is coated on a conductive metal thin plate made of copper, a copper alloy, nickel, or a nickel alloy, and a negative electrode uncoated portion on which a negative electrode active material is not coated. The negative electrode active material may include, for example, carbon, silicon, and the like. However, the negative electrode active material according to the present disclosure is not limited thereto.

The second electrode plate may serve as a positive electrode. The second electrode plate may include a positive electrode coated portion on which a positive electrode active material is coated on a conductive metal thin plate containing aluminum or the like, and a positive electrode uncoated portion on which a positive electrode active material is not coated. The positive electrode active material may include, for example, a lithium cobalt oxide and the like. However, a composition of the positive electrode active material according to the present disclosure is not limited thereto.

The separator may be interposed between the first electrode plate and the second electrode plate. The separator can prevent an electrical short circuit between the first electrode plate and the second electrode plate. The separator may include, for example, polyethylene, polypropylene, and a porous hollow polymer of polyethylene and polypropylene. However, a composition of the separator according to the present disclosure is not limited thereto.

A sub plate assembly 420 may be disposed on one side of the electrode assembly 410. The sub plate assembly 420 may be electrically connected to the first electrode plate (for example, negative electrode plate) and the second electrode plate (for example, positive electrode plate) of the electrode assembly 410. The sub plate assembly 420 may be electrically connected to the terminal plate 431 to be described below. The electrode assembly 410 may be electrically connected to the terminal plate 431 through the sub plate assembly 420. The sub plate assembly 420 may also be disposed on the other side of the electrode assembly 410. For example, the sub plate assemblies 420 may be disposed on both sides of the electrode assembly 410.

The electrode assembly 410 may be provided in a state where the sub plate assembly 420 is coupled with one end of the electrode assembly 410 and is then coupled with the other end. The electrode assembly 410 may penetrate through a second opening portion 406 of the can 400, and may be inserted in the first direction (X-axis).

In one embodiment, the sub plate assembly 420 may include a sub plate and a current collector structure. The sub plate may be connected to a tab formed on the negative electrode uncoated portion. The current collector structure may be disposed on the sub plate. The current collector structure may include a protrusion 421. The protrusion 421 of the current collector structure may come into contact with the terminal plate 431.

The cap assembly 430 may include cap plates 433, insulating members 432, and the terminal plates 431.

The cap plates 433 may be coupled with opening portions 405 and 406 of the can 400 by welding. The cap plates 433 may seal one end or both ends of the can 400.

The cap plate 433 may be coupled with the opening portions 405 and 406 of the can 400 by welding. For example, the cap plates 433 of the cap assembly 430 may be disposed on the opening portions 405 and 406 of the can 400 and may be welded with the short sides of first to fourth surfaces 401, 402, 403, and 404. The cap plate 433 may be welded with the can 100 to seal the can 100.

The cap plate 433 may be a square plate shape. A hole may be formed in the cap plate 433. The insulating member 432 may be coupled on the hole. The terminal plate 431 may be coupled on the first insulating member 432. The insulating member 432 may seal the cap plate 433 and the terminal plate 431. The insulating member 432 may at least partially insulate the cap plate 433 and the terminal plate 431.

The terminal plate 431 may come into contact with the sub plate assembly 420. The terminal plate 431 may be electrically connected to the electrode assembly 410 through the sub plate assembly 420.

The terminal plate 431 may be coupled with the sub plate assembly 420 by welding. As a result, the cap assembly 430 and the sub plate assembly 420 may be coupled. The sub plate assembly 420 and the terminal plate 431 may be welded after the cap assembly 430 is coupled.

The cap assemblies 430 may be coupled on the first opening portion 405 and the second opening portion 406 of the can 400. The can 400 may be seal by disposing the cap assemblies 430 in the opening portions 405 and 406 and being welded along the opening portions 405 and 406. In FIG. 4, it has been illustrated that the cap assembly 430 is disposed to be separated from the electrode assembly 410. However, this illustration is to illustrate the structure of the cap assembly 430, the present disclosure is not limited thereto.

The vent member 460 may be disposed on the first surface 401 of the can 400. For example, a vent hole may be formed in the first surface 401 of the can 400, and the vent member 460 may be coupled with the vent hole. The vent hole may be a shape corresponding to the vent member 460. A vent hole may be further formed in the second surface 402 of the can 400. In other embodiment, a vent hole may not be formed in the first surface 401 of the can 400, but may be formed only in the second surface 402 of the can 400. The vent member 460 may be formed to be opened when an internal pressure of the secondary battery exceeds a predetermined threshold pressure. The vent member 460 can prevent the explosion of the secondary battery or can prevent a chain heat reaction of another secondary battery disposed to be close to one secondary battery.

In some embodiments, the vent member 460 may include a notch. The notch may be formed by removing a part of the first surface 401 by a predetermined thickness, or may be at least one defect. The notch may be broken when the internal pressure of the can 400 exceeds the threshold pressure.

The can including the opening portions 405 and 406 on both sides may be produced, and the cap plates may be welded with the opening portions. FIG. 4 illustrates a state where the first opening portion 405 is already welded with the cap plate, and illustrates a state where the second opening portion 406 is not welded with the cap plate yet. However, the present disclosure is not limited to such welding order. After the electrode assembly 410 is inserted into the can 400, one of the first opening portion 405 and the second opening portion 406 may be sealed by the cap plate, and then the remainder may be sealed by the cap plate.

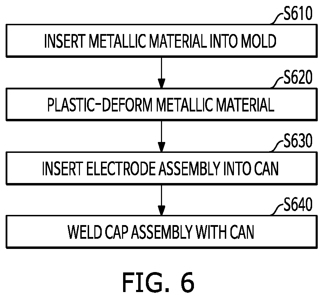

FIG. 6 is a flowchart for describing a method for manufacturing a secondary battery including a can for a secondary battery according to the present disclosure.

The method for manufacturing a secondary battery according to one embodiment of the present invention may be started with a step of inserting a metallic material into a mold (S610). The metallic material may include conductive metal such as aluminum, an aluminum alloy, stainless steel, and nickel-plated steel.

Subsequently, the metallic material may be plastic-deformed to manufacture a can (S620). A pressure may be applied to the metallic material by using a mold, and thus, the metallic material may be plastic-deformed to have a particular shape. For example, the plastic deformation may be performed through extrusion processing. Through the extrusion processing, the can may be provided by being extruded into a rectangular sectional shape having a space therein.

In the plastic deformation step, the first surface including long sides extending in the first direction, the second surface facing the first surface and including long sides extending in the first direction, the third surface perpendicular to the first surface and in contact with the long side of the first surface and the long side of the second surface, and the fourth surface facing the third surface and in contact with the long side of the first surface and the long side of the second surface may be formed. In the plastic deformation step, the corner formed by the long side of the first surface and the fourth surface in contact with the long side of the first surface may be formed to have the diagonal thickness thicker than the thicknesses of the first surface and the fourth surface.

In one embodiment, the corner may include the inner surface with the first radius of curvature R1 and the outer surface with the second radius of curvature R2 different from the first radius of curvature R1, and the first radius of curvature may be larger than the second radius of curvature.

According to one embodiment, the first radius of curvature may be equal to or more than the value obtained by adding R0.5 to the second radius of curvature.

According to one embodiment, the first radius of curvature may be equal to or more than R2.5, and the second radius of curvature may be equal to or less than R2.0. The radii of curvature may be designed in this manner, and thus, the space for welding the opening portion of the can and the cap plate can be secured. As a result, the welding can become easy.

According to one embodiment, the thickness of the first surface and the thickness of the second surface may be equal.

According to one embodiment, the diagonal thickness of the corner may be the value obtained by adding the difference between the first radius of curvature and the second radius of curvature to the thickness of the first surface.

Subsequently, the electrode assembly is inserted into the can (S630). The sub plate assemblies may be coupled with both ends of the electrode assembly, may penetrate through the opening portions of the can, and may be inserted in the first direction (X-axis).

Subsequently, the cap assemblies may be welded with the can (S640). The cap plates of the cap assemblies may be coupled with the opening portions of the can by welding. The cap plates may seal one end or both ends of the can. The cap plates of the cap assemblies may be disposed on the opening portions of the can, and may be welded with the short sides of the first to fourth surfaces.

The can including the opening portions at both ends may be produced, and the cap plates may be welded with the opening portions. After the electrode assembly is inserted into the can, one of the first opening portion and the second opening portion may be sealed by the cap plate, and then the remainder may be sealed by the cap plate.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

## Claims

1. A canfor a secondary battery comprising:
a first surfacecomprising long sides extending in a first direction;
a second surfacefacing the first surface, and comprising long sides extending in the first direction;
a third surfaceperpendicular to the first surface, and in contact with the long side of the first surface and the long side of the second surface; and
a fourth surfacefacing the third surface, and in contact with the long side of the first surface and the long side of the second surface,
wherein a cornerformed by the long side of the first surface and the fourth surface in contact with the long side of the first surface has a diagonal thicknessthicker than thicknesses of the first surface and the fourth surface.

2. The canfor a secondary battery as claimed in claim 1,
wherein the cornercomprises an inner surface with a first radius of curvatureand an outer surface with a second radius of curvaturedifferent from the first radius of curvature, and
the first radius of curvatureis larger than the second radius of curvature.

3. The canfor a secondary battery as claimed in claim 2, wherein the first radius of curvature is equal to or more than a value obtained by adding R0.5 to the second radius of curvature.

4. The canfor a secondary battery as claimed in claim 3, wherein the first radius of curvature is equal to or more than R2.5.

5. The canfor a secondary battery as claimed in claim 4, wherein the second radius of curvature is equal to or less than R2.0.

6. The can for a secondary battery as claimed in claim 5, further comprising:
a cap plate fastened to an opening portion formed by the first surface to the fourth surface,
wherein the opening portion and the cap plate are fastened by welding.

7. The can for a secondary battery as claimed in claim 2, wherein the thickness of the first surface and the thickness of the second surface are equal.

8. The canfor a secondary battery as claimed in claim 7, wherein the diagonal thickness is a value obtained by adding a difference between the first radius of curvature and the second radius of curvature to the thickness of the first surface.

9. The canfor a secondary battery as claimed in claim 8, wherein the first surface to the fourth surface are made of a material containing aluminum.

10. A method for manufacturing a can for a secondary battery, comprising:
a step of inserting a metallic material into a mold; and
a step of plastic-deforming the metallic material to manufacture a can,
wherein the plastic-deforming step comprises a step of forming a first surface comprising long sides extending in a first direction, a second surface facing the first surface, and comprising long sides extending in the first direction, a third surface perpendicular to the first surface, and in contact with the long side of the first surface and the long side of the second surface, and a fourth surface facing the third surface, and in contact with the long side of the first surface and the long side of the second surface, and forming a corner formed by the long side of the first surface and the fourth surface in contact with the long side of the first surface to have a diagonal thickness thicker than thicknesses of the first surface and the fourth surface.

11. The method for manufacturing a can for a secondary battery as claimed in claim 10, wherein the plastic deformation is deformation by extrusion processing.

12. The method for manufacturing a can for a secondary battery as claimed in claim 11,
wherein the corner comprises an inner surface with a first radius of curvature and an outer surface with a second radius of curvature different from the first radius of curvature, and
the first radius of curvature is larger than the second radius of curvature.

13. The method for manufacturing a can for a secondary battery as claimed in claim 12, wherein the first radius of curvature is equal to or more than a value obtained by adding R0.5 to the second radius of curvature.

14. The method for manufacturing a can for a secondary battery as claimed in claim 13, wherein the first radius of curvature is equal to or more than R2.5.

15. The method for manufacturing a can for a secondary battery as claimed in claim 14, wherein the second radius of curvature is equal to or less than R2.0.

16. The method for manufacturing a can for a secondary battery as claimed in claim 14, further comprising:
a step of fastening a cap plate to an opening portion formed by the first surface to the fourth surface,
wherein the opening portion and the cap plate are fastened by welding.

17. The method for manufacturing a can for a secondary battery as claimed in claim 12, wherein the thickness of the first surface and the thickness of the second surface are equal.

18. The method for manufacturing a can for a secondary battery as claimed in claim 17, wherein the diagonal thickness is a value obtained by adding a difference between the first radius of curvature and the second radius of curvature to the thickness of the first surface.

19. A can for a secondary battery comprising:
a first surface comprising long sides extending in a first direction;
a second surface facing the first surface, and comprising long sides extending in the first direction;
a third surface perpendicular to the first surface, and in contact with the long side of the first surface and the long side of the second surface;
a fourth surface facing the third surface, and in contact with the long side of the first surface and the long side of the second surface;
a fifth surface in contact with short sides of the first to fourth surfaces; and
an opening portion facing the fifth surface,
wherein a corner formed by the long side of the first surface and the fifth surface in contact with the long side of the first surface has a diagonal thickness thicker than thicknesses of the first surface and the fifth surface.

20. The can for a secondary battery as claimed in claim 19,
wherein the corner comprises an inner surface with a third radius of curvature and an outer surface with a fourth radius of curvature different from the third radius of curvature,
the third radius of curvature is larger than the fourth radius of curvature,
the thickness of the first surface and the thickness of the fifth surface are equal, and
the diagonal thickness is a value obtained by adding a difference between the third radius of curvature and the fourth radius of curvature to the thickness of the first surface.
